# EUROPÄISCHE PATENTANMELDUNG

(11) **EP 4 793 066 A1**
(43) Veröffentlichungstag der Anmeldung: **19.08.2026**
(21) Anmeldenummer: 26154599.0
(22) Anmeldetag: 28.01.2026
(51) Int. Cl.: B60C 11/16, B60C 11/11, B60C 11/12, B60C 11/03

(54) **FAHRZEUGREIFEN**

(30) Priorität: 13.02.2025 DE 102025105393
(71) Anmelder: Continental Reifen Deutschland GmbH, 30175 Hannover (DE)
(72) Erfinder: Bauer, Claudia, 30175 Hannover (DE); Karow, Malte, 30175 Hannover (DE); Spechtmeyer, Torben, 30175 Hannover (DE); Schlittenhard, Jan, 30175 Hannover (DE); Wackerhage, Tanja, 30175 Hannover (DE); Wiese, Klaus, 30175 Hannover (DE); Dienes, Yvonne, 30175 Hannover (DE); Rodrigues, Pedro-Nuno, 30175 Hannover (DE)
(74) Vertreter: Continental Corporation

(57) **Zusammenfassung**

Fahrzeugreifen (1) mit einer Schulterprofilblockreihe (3a, 3b), einer Zwischenprofilblockreihe (4a - 4f) und einer Mittelprofilblockreihe (5), wobei diese Profilblockreihen in Pitches (P1, P2) mit zumindest zwei unterschiedlichen Pitchlängen (PL1, PL2) gegliedert sind, wobei Umfangslängen der Profilblöcke (7, 8, 8a, 8b, 9) dieser Profilblockreihen mit den unterschiedlichen Pitchlängen (PL1, PL2) variieren, wobei die Zwischenprofilblockreihen mehrere Spike-Profilblöcke (8a) mit Spikes (10) und Schutzbereichen (11) sowie mehrere Referenzprofilblöcke (8b) ohne Spikes und Schutzbereiche umfassen, wobei für jeden Spike-Profilblock (8a) in seiner Zwischenprofilblockreihe ein Referenzprofilblock (8b) mit identischer Pitchlänge und Außenumfangsfläche (28) vorgesehen ist, wobei zumindest die Profilblöcke der Schulterprofilblockreihe und der Mittelprofilblockreihe Feineinschnitte und/oder Mikrorillen aufweisen, wobei die Profilblöcke eine Summe der projizierten Kantenlänge in Reifenbreitenrichtung (15) innerhalb der Bodenaufstandsflächenbreite (24) und über den gesamten Reifenumfang erzeugen, wobei diese Summe mindestens 90% einer Referenzsumme der projizierten Kantenlänge in Reifenbreitenrichtung beträgt, wobei die Referenzsumme der Gesamtsumme aller projizierten Kantenlängen in Reifenbreitenrichtung innerhalb der Bodenaufstandsflächenbreite und über den Reifenumfang entspricht, wobei alle Spike-Profilblöcke und Schutzbereiche durch ihre jeweiligen Referenzprofilblöcke ersetzt werden.

## Beschreibung

Die Erfindung betrifft einen Fahrzeugreifen, insbesondere Winterreifen für ein Fahrzeug, umfassend eine Lauffläche mit einer Schulterprofilblockreihe, einer Zwischenprofilblockreihe und einer Mittelprofilblockreihe, jeweils umfassend eine Vielzahl von durch Quer- und/oder Schrägrillen unterteilte Profilblöcke.

Winterreifen mit Spikes sind sehr gut auf glattem Eis, aber nicht der beste Reifen auf mittelgroben und groben Eispisten. Demgegenüber realisieren Winterreifen mit weicher Gummimischung, sogenannte Softcompound-Reifen, eine gute Performance auf mittelrauem und rauem Eis.

Aus der EP 0 192 911 A1 geht ein Luftreifen mit einem den Boden berührenden Laufflächenabschnitt mit einem Paar von Seitenkanten, wobei der Laufflächenabschnitt eine Vielzahl unabhängiger Blockelemente aufweist, welche in ihrer axialen Breite und ihrer Länge in Umfangsrichtung variieren können. Die Blockelemente sind in im Wesentlichen parallelen Reihen angeordnet, welche sich zwischen Umfangsebenen erstrecken und wobei jede Reihe Blockelemente aufweist, die im Wesentlichen dieselbe Länge in Umfangsrichtung aufweisen. Eine Vielzahl von verschiedenen Reihen mit sechs, fünf oder vier Blockelementen ist vorgesehen, wobei das Produkt aus der Länge der Blockelemente in Umfangsrichtung in einer jeweiligen Reihe multipliziert mit der Anzahl der Blockelemente in dieser Reihe im Wesentlichen eine Konstante ist.

Die Aufgabe der vorliegenden Erfindung besteht darin, einen Fahrzeugreifen bereitzustellen, der den oben genannten Zielkonflikt zwischen glattem Eis und mittelrauem bzw. rauem Eis verbessert. Insbesondere soll der Fahrzeugreifen eine verbesserte Traktion und Fahrstabilität auf Eis bieten. Die Aufgabe wird gelöst durch den Gegenstand von Patentanspruch 1. Bevorzugte Ausführungsformen sind Gegenstand der abhängigen Ansprüche.

Ein erfindungsgemäßer Fahrzeugreifen, insbesondere Winterreifen, umfasst eine Lauffläche, die eine Schulterprofilblockreihe, eine Zwischenprofilblockreihe und eine Mittelprofilblockreihe aufweist, wobei diese Profilblockreihen in Pitches mit zumindest zwei unterschiedlichen Pitchlängen gegliedert sind, wobei Umfangslängen der Profilblöcke dieser Profilblockreihen mit den unterschiedlichen Pitchlängen variieren, wobei die Zwischenprofilblockreihen mehrere Spike-Profilblöcke mit Spikes und Schutzbereichen sowie mehrere Referenzprofilblöcke ohne Spikes und Schutzbereiche umfassen, wobei für jeden Spike-Profilblock in seiner Zwischenprofilblockreihe ein Referenzprofilblock mit identischer Pitchlänge und Außenumfangsfläche vorgesehen ist, wobei zumindest die Profilblöcke der Schulterprofilblockreihe und der Mittelprofilblockreihe Feineinschnitte, Mikrorillen, Quer-Feineinschnitte und/oder Quer-Mikrorillen aufweisen, wobei die Profilblöcke eine Summe der projizierten Kantenlänge in Reifenbreitenrichtung innerhalb der Bodenaufstandsflächenbreite und über den gesamten Reifenumfang erzeugen, wobei diese Summe mindestens 90% einer Referenzsumme der projizierten Kantenlänge in Reifenbreitenrichtung beträgt, wobei die Referenzsumme als die Gesamtsumme aller projizierten Kantenlängen in Reifenbreitenrichtung innerhalb der Bodenaufstandsflächenbreite und über den Reifenumfang bestimmt wird, indem alle Spike-Profilblöcke und Schutzbereiche durch ihre jeweiligen Referenzprofilblöcke ersetzt werden.

Für jeden Spike-Profilblock mit wenigstens einem Spike und einem Schutzbereich ist in Umfangsrichtung der gleichen Zwischenprofilblockreihe ein Referenzprofilblock vorgesehen, der keine Spikes oder Schutzbereiche aufweist und die gleiche Pitchlänge und Außenumfangsfläche besitzt. Dieser Referenzprofilblock, auch als Bruderblock bezeichnet, dient als Vergleichsblock zur Ermittlung der projizierten Kantenlänge in Reifenbreitenrichtung, indem er zeigt, wie der zugehörige Spike-Profilblock aussehen würde, wenn er keine Spikes und Schutzbereiche aufwiese. Selbstverständlich können die Zwischenprofilblockreihen auch weitere Profilblöcke enthalten, die weder Spikes noch Schutzbereiche aufweisen und nicht als Bruderblock für einen Spike-Profilblock fungieren.

Die Außenumfangsfläche eines Profilblocks ist die Fläche, ohne die Schutzbereiche, Spikes, Feineinschnitte, Mikrorillen, Quer-Feineinschnitte und/oder Quer-Mikrorillen, die an der Oberfläche des Reifens liegt und somit in direktem Kontakt mit der Fahrbahn kommt. Sie beeinflusst die Haftung, den Verschleiß und die Abrollgeräusche des Reifens. Der Referenzprofilblock und der zugehörige Spike-Profilblock weisen bevorzugt dieselbe Geometrie und Außenform auf.

Die nach Herstellung des Fahrzeugreifens real vorhandene Kantenlänge wird mit einem theoretischen, modellbasierten Kantenlängenwert verglichen. Die Referenzsumme der projizierten Kantenlänge in Reifenbreitenrichtung des erfindungsgemäßen Fahrzeugreifens berechnet sich als die Gesamtsumme der projizierten Kantenlängen in Reifenbreitenrichtung aller Profilblöcke über die Bodenaufstandsflächenbreite und über den gesamten Reifenumfang, wobei bei der Berechnung alle Spike-Profilblöcke durch ihre Bruderblöcke ersetzt werden.

Die projizierte Kantenlänge in Reifenbreitenrichtung bezeichnet die Gesamtlänge aller Kanten von Profilblöcken, die innerhalb der Bodenaufstandsflächenbreite des Reifens auftreten und in Breitenrichtung verlaufen. Sie wird als Projektion auf eine gedachte Ebene betrachtet, die parallel zur Reifenbreite verläuft. Diese Kanten der Profilblöcke werden sowohl durch Profilblockkanten als auch durch Feineinschnitte, Mikrorillen, Quer-Feineinschnitte und/oder Quer-Mikrorillen erzeugt und tragen wesentlich zur Verzahnung mit der Fahrbahnoberfläche bei. Im Folgenden wird als die projizierte Kantenlänge der Wert bezeichnet, der sich aus der Summe aller Profilblockkanten sowie Feineinschnitten, Mikrorillen, Quer-Feineinschnitten und/oder Quer-Mikrorillen ergibt. Die projizierte Kantenlänge wird über den gesamten Reifenumfang summiert, um eine vergleichbare Größe für die Haftungseigenschaften des Reifens zu erhalten. Die Summe der projizierten Kantenlängen ist ein Indikator für die Traktion des Fahrzeugreifens, insbesondere auf rauem oder mittelrauem Eis, da eine größere Kantenlänge eine intensivere Verzahnung mit der Fahrbahn ermöglicht.

Die Referenzsumme der projizierten Kantenlänge in Reifenbreitenrichtung wird ermittelt, indem für jeden Spike-Profilblock der entsprechende Referenzprofilblock ohne Spike und Schutzbereich betrachtet wird. Dadurch erhält man eine Vergleichsgröße, die beschreibt, welche Kantenlänge ein Fahrzeugreifen ohne Spikes und Schutzbereiche aufweisen würde. Diese Referenzsumme dient dazu, die tatsächliche Summe der projizierten Kantenlängen des erfindungsgemäßen Reifens in Relation zu setzen. Die Erfindung sieht vor, dass die Summe der projizierten Kantenlängen mindestens 90 % der Referenzsumme beträgt, um eine optimale Balance zwischen der Traktion auf glattem und rauem Eis zu gewährleisten.

Der hier vorgeschlagene Fahrzeugreifen hat im Vergleich zu bisher bekannten Winter- bzw. Spikereifen mehr verbleibende Kanten, während der Bereich um den Spike trotzdem durch die Schutzbereiche versteift ist. Die vergleichsweise geringere Spike-Anzahl über den gesamten Umfang des Fahrzeugreifens sorgt in Kombination mit einer bestimmten Spikegeometrie für eine bessere Kraftübertragung und Kratzfestigkeit auf glattem Eis. Beispielsweise beträgt die Spike-Anzahl weniger als 50 Spikes pro Meter Reifenumfang.

Dadurch, dass die jeweilige Zwischenprofilblockreihe sowohl Spike-Profilblöcke als auch Referenzprofilblöcke aufweist, weisen nicht alle Profilblöcke der Zwischenprofilblockreihe Schutzbereiche mit darin angeordneten Spikes auf. Dies ist erforderlich, um die genannte Reduzierung der Kantenlänge durch Schutzbereiche und Spikes von maximal 10% bzw. um die Summe der projektzierten Kantenlänge in Reifenbreitenrichtung in der Bodenaufstandsflächenbreite über den Reifenumfang für den Fahrzeugreifen von mehr als 90% der Referenzsumme zu erreichen.

Spikes sind metallische oder ähnliche Elemente, die in der Lauffläche eines Winterreifens eingebettet sind, um die Haftung auf Eis und Schnee zu verbessern. Der Schutzbereich des jeweiligen Spikes ist der Bereich um den Spike herum, der so gestaltet ist, dass er den Spike schützt und gleichzeitig die Traktionseigenschaften des Reifens nicht wesentlich beeinträchtigt. Der Schutzbereich ist frei von Einschnitten und Rillen und dient zur Versteifung des Profilblocks, um den Bereich um den Spike zu versteifen. Das heißt, dass nur so viele Spikes bzw. Schutzbereich auf dem Umfang der Lauffläche verteilt angeordnet sind, dass die genannte Referenzsumme der Kantenlänge in Reifenbreitenrichtung innerhalb der Bodenaufstandsflächenbreite und über den gesamten Reifenumfang um maximal 10% reduziert wird.

Ein Pitch ist ein sich wiederholender Abschnitt des Reifenprofils entlang der Umfangsrichtung des Fahrzeugreifens und umfasst eine bestimmte Anzahl von Profilblöcken. Die Pitchlänge bezeichnet die Länge eines einzelnen Pitchabschnitts entlang der Reifenumfangsrichtung. Innerhalb einer Lauffläche existieren mindestens zwei unterschiedliche Pitchlängen zur Reduzierung von Vibrationen.

Die Lauffläche umfasst vorzugsweise zwei Schulterprofilblockreihen und genau eine dazwischen angeordnete Mittelprofilblockreihe, wobei in axialer Richtung des Fahrzeugreifens zwischen den Schulterprofilblockreihen und der Mittelprofilblockreihe jeweils wenigstens zwei Zwischenprofilblockreihen angeordnet sind. Die Profilblöcke benachbarter Zwischenprofilblockreihen sind durch Nebenrillen getrennt, die jeweils zwei in Reifenumfangsrichtung aufeinanderfolgende Quer-und/oder Schrägrillen miteinander verbinden.

Je nach Ausgestaltung der Spike-Profilblöcke können diese Profilblöcke ebenfalls Feineinschnitte, Mikrorillen, Quer-Feineinschnitte und/oder Quer-Mikrorillen aufweisen. Alternativ kann einer oder mehrere der Profilblöcke, die jeweils einen Spike und einen zugehörigen Schutzbereich aufweisen, frei von Feineinschnitten, Mikrorillen, Quer-Feineinschnitten und/oder Quer-Mikrorillen sein. Feineinschnitte und Mikrorillen sind feine Linien oder Vertiefungen auf den Profilblöcken der Lauffläche, die die Flexibilität der Blöcke erhöhen und die Traktion auf winterlichen Fahrbahnoberflächen verbessern.

Vorzugsweise beträgt ein Anteil der Kantenlänge in Reifenbreitenrichtung innerhalb der Bodenaufstandsflächenbreite und aufsummiert über den gesamten Umfang des Fahrzeugreifens bezogen auf eine Bodenaufstandsfläche des Fahrzeugreifens mindestens 0,15. Dieser Kennwert bezieht sich also auf die Kantenlänge innerhalb der Bodenaufstandsflächenbreite, auch "Footprintbreite" genannt, aufsummiert über den Reifenumfang pro Bodenaufstandsfläche, auch "Footprint" genannt.

Bevorzugt beträgt der Anteil der Kantenlänge in Reifenbreitenrichtung innerhalb der Bodenaufstandsflächenbreite und aufsummiert über den gesamten Umfang des Fahrzeugreifens bezogen auf die Bodenaufstandsfläche des Fahrzeugreifens weniger als 0,25.

Die Bodenaufstandsfläche ist der Bereich des Fahrzeugreifens, der bei Kontakt mit der Fahrbahn direkt belastet wird. Die Bodenaufstandsflächenbreite ist die Breite dieser Fläche, während die Bodenaufstandsflächenlänge ihre Länge entlang der Umfangsrichtung des Reifens beschreibt.

Ferner bevorzugt weist oder weisen ein oder eine Vielzahl von Profilblöcken der Zwischenprofilblockreihe eine Vielzahl von Feineinschnitten, Mikrorillen, Quer-Feineinschnitte und/oder Quer-Mikrorillen auf. Die Einschnitte und/oder Rillen erhöhen die Flexibilität der Profilblöcke und verbessern die Anpassung an unebene Oberflächen. Nicht nur die Schulterprofilblöcke und die Mittelprofilblöcke können Einschnitte und Rillen aufweisen, sondern auch Zwischenprofilblöcke, insbesondere die Referenzprofilblöcke. In jedem Fall weisen die Referenzprofilblöcke jeweils eine Vielzahl von Feineinschnitten, Mikrorillen, Quer-Feineinschnitte und/oder Quer-Mikrorillen auf. Denkbar ist ferner, dass einer oder mehrere Spike-Profilblöcke Feineinschnitte, Mikrorille, Quer-Feineinschnitte und/oder Quer-Mikrorillen aufweisen.

Nach einem Ausführungsbeispiel sind die Feineinschnitte und/oder die Mikrorillen des jeweiligen Profilblocks mit einer Abweichung von kleiner als 45° zu einer axialen Richtung des Fahrzeugreifens angeordnet. Diese Ausrichtung trägt zu einer verbesserten Stabilität und Traktion in unterschiedlichen Fahrbedingungen bei. Dabei ist es nicht zwingend erforderlich, dass alle Feineinschnitte und/oder Mikrorillen betragsmäßig mit demselben Winkel ausgerichtet sind. Vielmehr können die Einschnitte bzw. Rillen je nach Anforderung mit unterschiedlichen Winkeln ausgerichtet sein.

Die genannte "axiale Richtung" und die "Reifenbreitenrichtung" verläuft parallel zur Rotationsachse des Fahrzeugreifens bzw. in Querrichtung der Lauffläche. Die Begriffe "axiale Richtung" und "Reifenbreitenrichtung" werden hier synonym verwendet.

Vorzugsweise ist ein oder eine Vielzahl der Feineinschnitte wenigstens eines der Profilblöcke jeweils in Form einer Breitenrichtungslamelle ausgebildet. Eine Breitenrichtungslamelle ist ein Feineinschnitt, der sich hauptsächlich quer zur Umfangsrichtung des Fahrzeugreifens, vorzugsweise mit einer Abweichung von kleiner als 45° zu einer axialen Richtung des Fahrzeugreifens, erstreckt und die Flexibilität der Profilblöcke sowie die Kraftübertragung auf winterlichen Fahrbahnbelägen verbessert.

Nach einem Ausführungsbeispiel weist die jeweilige Breitenrichtungslamelle jeweils einen oder eine Vielzahl von Linienbereichen, die sich in einer geraden oder gekrümmten Form erstrecken, und einen oder eine Vielzahl von Wellenbereichen mit einer Amplitude zu einer Referenzmittellinie der Breitenrichtungslamelle auf. Die jeweilige Breitenrichtungslamelle kann in Draufsicht beispielsweise sinusförmig und/oder zickzackförmig verlaufen, wobei mehrere Linienbereiche oder Wellenbereiche hintereinander angeordnet sein können. Ferner können sich Linienbereiche und Wellenbereiche abwechseln. Ferner alternativ kann die jeweilige Breitenrichtungslamelle in Reifenumfangsrichtung ein oder mehrere Ausbauchungen aufweisen. Die Breitenrichtungslamellen verbessern die Flexibilität der Profilblöcke und das Fahrverhalten, insbesondere die Kraftübertragung, auf winterlichen Fahrbahnoberflächen.

Die genannte "Reifenumfangsrichtung" ist auf die Lauffläche bzw. den Umfang des Fahrzeugreifens bezogen. Der Linienbereich einer Breitenrichtungslamelle verläuft in einer geraden oder leicht gekrümmten Form, während der Wellenbereich durch wellenartige Bewegungen mit einer definierten Amplitude zu einer Referenzmittellinie der Breitenrichtungslamelle gekennzeichnet ist.

Vorzugsweise sind die Breitenrichtungslamellen des jeweiligen Profilblocks in Draufsicht im Wesentlichen parallel beabstandet zueinander verlaufend angeordnet. Insbesondere sind die Breitenrichtungslamellen eines oder einer Vielzahl der Profilblöcke im Wesentlichen parallel zu einer ersten Kante dieses Profilblocks ausgerichtet. Die erste Kante kann eine Schulter- bzw. Querrille seitlich begrenzen. Alternativ kann die erste Kante eine Nebenrille seitlich begrenzen, die zwei in Umfangsrichtung aufeinanderfolgende Querrillen bzw. Schrägrillen verbindet. Im Bereich der Schulterprofilblockreihe kann die Rillen eine Querrille sein, die bei Erstreckung zwischen den Zwischenprofilblockreihen und der Mittelprofilblöcke in eine Schrägrille übergehen kann. Eine derartige Quer- bzw. Schrägrille ist also eine Rille, welche Profilblöcke der jeweiligen Profilblockreihe über den Reifenumfang unterteilt.

Wenn der jeweilige Profilblock Mikrorillen aufweist, erstrecken sich die Mikrorillen des jeweiligen Profilblocks bevorzugt parallel und kreuzungsfrei zu den Breitenrichtungslamellen desselben Profilblocks. Entsprechend können die Mikrorillen im Wesentlichen parallel zur genannten ersten Kante des jeweiligen Profilblocks ausgerichtet sein. "Kreuzungsfrei" bedeutet, dass sich die Mikrorillen und die Feineinschnitte bzw. Breitenrichtungslamellen an keinem Punkt treffen, sondern separat ausgebildet und auf dem jeweiligen Profilblock angeordnet sind.

Wenn der jeweilige Profilblock Quer-Feineinschnitte und/oder Quer-Mikrorillen aufweist, so sind die Quer-Feineinschnitte bzw. die Quer-Mikrorillen des jeweiligen Profilblocks vorzugsweise in Draufsicht im Wesentlichen parallel beabstandet zueinander verlaufend angeordnet.

Vorzugsweise verläuft oder verlaufen eine oder mehrere der Quer-Feineinschnitte und/oder der Quer-Mikrorillen schräg zu wenigstens einer der Breitenrichtungslamellen und/oder wenigstens einer der Mikrorillen. Die Quer-Mikrorillen und/oder Quer-Feineinschnitte können die Mikrorillen und/oder Feineinschnitte unter einem Winkel kreuzen, wodurch Teilflächen erzeugt werden, die unabhängig voneinander und flexibel zueinander an dem jeweiligen Profilblock angebunden sind.

Bevorzugt sind die Quer-Feineinschnitte und/oder die Quer-Mikrorillen eines oder einer Vielzahl der Profilblöcke im Wesentlichen parallel zu einer zweiten Kante dieses Profilblocks ausgerichtet. Die zweite Kante ist eine von der oben genannten ersten Kante verschiedene Kante. Die erste und zweite Kante können sich an einer Ecke des gemeinsamen Profilblocks treffen. Demnach kann die Ausrichtung der Feineinschnitte, Mikrorillen, Quer-Feineinschnitte und/oder Quer-Mikrorillen an die Ausgestaltung des jeweiligen Profilblocks angepasst werden.

Ferner bevorzugt weisen die Profilblöcke eine Blockkontaktfläche für einen vollständigen Reifenumfang zwischen 60% und 80%, vorzugsweise zwischen 65% und 76%, bevorzugt zwischen 67% und 74%, auf. Die Blockkontaktfläche bezeichnet den Anteil der Profilblöcke an der Gesamtfläche der Lauffläche, der bei einer vollständigen Umdrehung des Reifens mit der Fahrbahn in Kontakt kommt, abzüglich Feineinschnitte, Mikrorillen, Quer-Feineinschnitte und/oder Quer-Mikrorillen.

Nach einem Ausführungsbeispiel umfasst die Lauffläche zwei Schulterprofilblockreihen und genau eine dazwischen angeordnete Mittelprofilblockreihe, wobei in axialer Richtung des Fahrzeugreifens zwischen der jeweiligen Schulterprofilblockreihe und der Mittelprofilblockreihe jeweils wenigstens zwei Zwischenprofilblockreihen angeordnet sind. Mit anderen Worten besteht die Lauffläche insgesamt aus einer Mittelprofilblockreihe, zwei Schulterprofilblockreihen und zumindest vier Zwischenprofilblockreihen.

Vorzugsweise sind die Profilblöcke von jeweils zwei benachbarten Zwischenprofilblockreihen durch eine jeweilige Nebenrille voneinander getrennt, die jeweils zwei in Reifenumfangsrichtung aufeinander folgende Quer- und/oder Schrägrillen miteinander verbinden. Nebenrillen sind Rillen zwischen zwei Zwischenprofilblöcken, die in axialer Richtung bzw. in Reifenbreitenrichtung benachbarte Zwischenprofilblockreihen voneinander trennen und zur Ableitung von Wasser oder Schnee sowie zur Verbesserung der Traktion beitragen.

Vorzugsweise weist ein erster Pitch mit einer ersten Pitchlänge beidseits der Mittelprofilblockreihe jeweils zwei Zwischenprofilblockreihen auf, wobei ein zweiter Pitch mit einer zweiten Pitchlänge beidseits der Mittelprofilblockreihe jeweils drei Zwischenprofilblockreihen aufweist. Anders gesagt weisen Profilblöcke in Umfangsrichtung unterschiedliche Blocklängen auf. Der zweite Pitch ist in Umfangsrichtung vor oder hinter dem Pitch angeordnet. Die zweite Pitchlänge ist vorzugweise im Vergleich zur ersten Pitchlänge kürzer ausgeführt. Demnach sind die Profilblöcke des zweiten Pitches in Umfangsrichtung kürzer ausgebildet als die Profilblöcke des ersten Pitches, wobei am in Umfangsrichtung kürzeren zweiten Pitch jeweils drei Profilblöcke zur Realisierung von drei Zwischenprofilblockreihen vorgesehen sind, während am in Umfangsrichtung längeren ersten Pitch jeweils nur zwei Profilblöcke zur Realisierung von zwei Zwischenprofilblockreihen vorgesehen sind.

Wenn der jeweilige Pitch zwei Zwischenprofilblockreihen aufweist, ist nur eine Nebenrille vorgesehen. Wenn der jeweilige Pitch drei Zwischenprofilblockreihen aufweist, sind zwei Nebenrillen vorgesehen, um die Profilblöcke zu unterteilen. Nach einem Ausführungsbeispiel sind die beiden Nebenrillen von drei benachbart angeordneten Profilblöcken der drei Zwischenblockreihen im Wesentlichen parallel zueinander angeordnet.

Denkbar ist ferner, dass an der Lauffläche weitere Pitches vorgesehen sind, die sich von dem ersten und zweiten Pitch in ihrer Ausgestaltung, insbesondere in der Pitchlänge unterscheiden können.

Weitere Merkmale, Vorteile und Einzelheiten der Erfindung werden nun anhand der Zeichnungen, die ein Ausführungsbeispiel der Erfindung zeigen, näher beschrieben, wobei gleiche oder ähnliche Bauteile mit demselben Bezugszeichen versehen sind.

Dabei zeigen
- Fig. 1: eine schematische Draufsicht auf eine Lauffläche eines erfindungsgemäßen Fahrzeugreifens gemäß einer bevorzugten Ausführungsform der Erfindung,
- Fig. 2: eine erste detaillierte Draufsicht eines exemplarischen Profilblocks einer Zwischenprofilblockreihe der Lauffläche nach Figur 1 ohne darauf angeordnetem Spike, und
- Fig. 3: eine zweite detaillierte Draufsicht eines exemplarischen Profilblocks der Zwischenprofilblockreihe der Lauffläche nach Figur 1 und Figur 2 mit darauf angeordnetem Spike.

Gemäß der Erfindung ausgeführte Fahrzeugreifen 1 sind Winterreifen für Kraftfahrzeuge, insbesondere für mehrspurige Kraftfahrzeuge, vorzugsweise PKW-Reifen für Anwendungen auf vereisten Fahrbahnen. Ein hierin beschriebener Fahrzeugreifen 1 eignet sich vorteilhaft für den Einsatz als Winterreifen. Der hierin beschriebene Fahrzeugreifen 1 ist insbesondere als Spike-Reifen zu verstehen, der hier exemplarisch weniger als 50 Spikes pro Reifenumfangsmeter aufweist. Fahrzeugreifen 1 im Sinn der Erfindung sind insbesondere mit Druckluft gefüllte Luftreifen, Vollreifen ohne Luftfüllung, Sonderreifen mit Federelementen im Inneren oder Segmentreifen aus mehreren austauschbaren Segmenten.

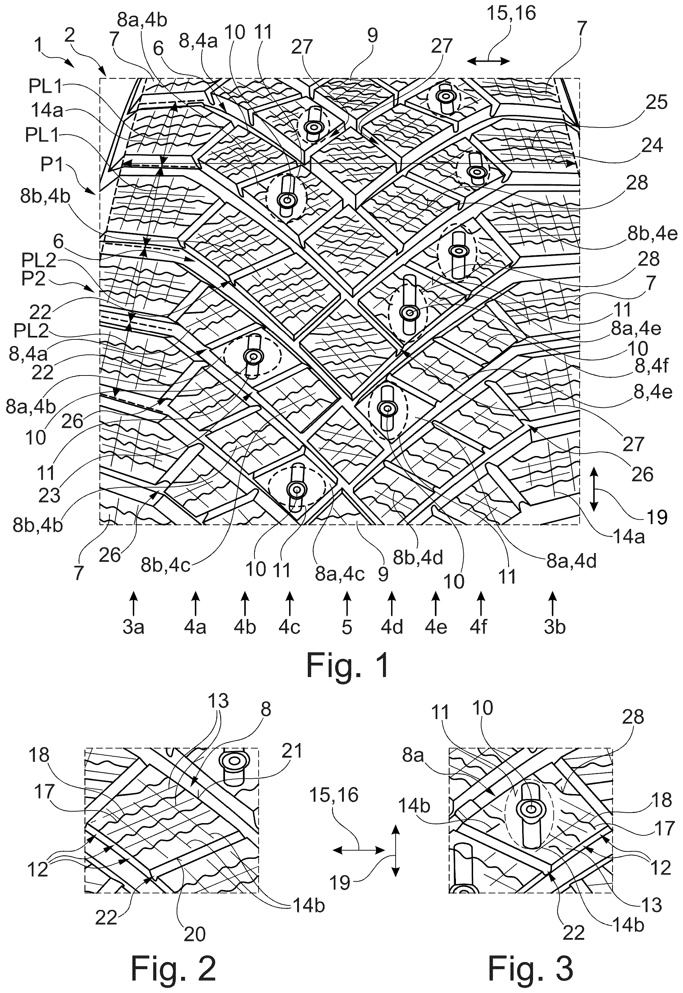

Figur 1 zeigt einen Abschnitt einer Lauffläche 2 des erfindungsgemäßen Fahrzeugreifens 1 in der Draufsicht. Die Lauffläche 2 besteht hier beispielhaft aus zwei Schulterprofilblockreihen 3a, 3b mit jeweils einer Vielzahl von in Umfangsrichtung hintereinander angeordneten Profilblöcken 7 und genau einer dazwischen angeordneten Mittelprofilblockreihe 5 mit einer Vielzahl von in Umfangsrichtung hintereinander angeordneten Profilblöcken 9. In axialer Richtung 16 des Fahrzeugreifens 1 sind zwischen der jeweiligen Schulterprofilblockreihe 3a, 3b und der Mittelprofilblockreihe 5 je nach Laufstreifenband jeweils zwei bzw. drei Zwischenprofilblockreihen 4a, 4b, 4c, 4d, 4e, 4f mit jeweils einer Vielzahl von in Umfangsrichtung hintereinander angeordneten Profilblöcken 8, 8a, 8b angeordnet. Die Profilblöcke 7, 8, 8a, 8b, 9 sind in Umfangsrichtung durch erste Quer- bzw. Schrägrillen 6 unterteilt. Die Rille mit dem Bezugszeichen 6 ist im Bereich der jeweiligen Schulterprofilblockreihe 3a, 3b als Querrille ausgeformt und wird im Bereich der Zwischenprofilblockreihen 4a, 4b, 4c, 4d, 4e, 4f und Mittelprofilblockreihe 5 zu einer Schrägrille.

Die Profilblockreihen 3a, 3b, 4a - 4f, 5 sind in Pitches P1, P2 mit zumindest zwei unterschiedlichen Pitchlängen PL1, PL2 gegliedert, wobei die Umfangslängen der Profilblöcke 7, 8, 8a, 8b, 9 der Profilblockreihen 3a, 3b, 4a - 4f, 5 mit den unterschiedlichen Pitchlängen PL1, PL2 entsprechend variieren.

Ein in Reifenumfangsrichtung 19 längerer erster Pitch P1 weist auf jeder Seite der Mittelprofilblockreihe 5 jeweils zwei in axialer Richtung 16 bzw. in Reifenbreitenrichtung 15 nebeneinander liegende Profilblöcke 8, 8a, 8b der jeweils zwei Zwischenprofilblockreihen 4a, 4b bzw. 4e, 4f auf. Die Profilblöcke 8, 8a, 8b von jeweils zwei benachbarten Zwischenprofilblockreihen 4a, 4b bzw. 4e, 4f sind durch eine Nebenrillen 22 voneinander getrennt, wobei die Nebenrille 22 zwei in Reifenumfangsrichtung 19 aufeinander folgende erste Quer- bzw. Schrägrillen 6 miteinander verbinden.

Ein im Vergleich zum ersten Pitch P1 in Reifenumfangsrichtung 19 kürzerer zweiter Pitch P2 weist auf jeder Seite der Mittelprofilblockreihe 5 jeweils drei in axialer Richtung 16 bzw. in Reifenbreitenrichtung 15 nebeneinander liegende Profilblöcke 8, 8a, 8b der jeweils drei Zwischenprofilblockreihen 4a, 4b, 4c bzw. 4d, 4e, 4f auf. Demnach weist ein erster Pitch P1 mit einer ersten Pitchlänge PL1 beidseits der Mittelprofilblockreihe 5 jeweils zwei, also insgesamt vier, Zwischenprofilblockreihen 4a, 4b, 4e, 4f auf, während ein zweiter Pitch P2 mit einer zweiten Pitchlänge PL2 beidseits der Mittelprofilblockreihe 5 jeweils drei, also insgesamt sechs, Zwischenprofilblockreihen 4a - 4f aufweist. Die Zwischenprofilblockreihen am ersten Pitch P1 sind mit den Bezugszeichen 4a, 4b, 4e und 4f gekennzeichnet. Die Zwischenprofilblockreihen am zweiten Pitch P2 sind mit den Bezugszeichen 4a, 4b, 4c, 4d, 4e und 4f gekennzeichnet. Die Pitchlängen PL1 bzw. PL2 erstrecken sich von einer Mittelachse einer Quer- bzw. Schrägrille 6 im Bereich des Querrillenbereichs zwischen den Schulterprofilblöcken 7 zur Mittelachse der in Reifenumfangsrichtung 19 darauffolgenden Quer- bzw. Schrägrille 6 im Bereich des Querrillenbereichs. Die Mittelachse sind hier als gestrichelte Linie angedeutet.

Der Profilblock 7 der jeweiligen Schulterprofilblockreihe 3a, 3b eines Pitches P1, P2 und der dazu benachbarte Profilblock 8, 8a, 8b der Zwischenprofilblockreihen 4a bzw. 4f desselben Pitches P1, P2 sind jeweils durch eine zweite Schrägrille 26 voneinander getrennt. Die der Mittelprofilblockreihe 5 zugewandten Profilblöcke 8, 8a, 8b der Zwischenprofilblockreihen 4b bzw. 4c und 4d bzw. 4e eines Pitches P1, P2 sind ebenfalls durch eine dritte Schrägrille 27 von dem zugehörigen benachbarten Profilblock 9 der Mittelprofilblockreihe 5 desselben eines Pitches P1, P2 getrennt.

Die Zwischenprofilblockreihen 4a - 4f weisen mehrere Spike-Profilblöcke 8a mit Spikes 10, die jeweils von einem zugehörigen Schutzbereich 11 umgeben sind, sowie mehrere Profilblöcke 8 und Referenzprofilblöcke 8b ohne Spikes und Schutzbereiche auf. Neben den einfachen Profilblöcken, die mit dem Bezugszeichen 8 versehen sind, ist für jeden Spike-Profilblock 8a in seiner Zwischenprofilblockreihe 4a - 4f ein Referenzprofilblock 8b mit identischer Pitchlänge PL1, PL2 und Außenumfangsfläche 28 vorgesehen.

In Figur 1 ist dies beispielhaft für mehrere Profilblöcke 8a, 8b der Zwischenprofilblockreihen 4a - 4f dargestellt. Links der Mittelprofilblockreihe 5 ist oben im Bereich des oberen ersten Pitches P1 ein Spike-Profilblock 8a an der zweiten Zwischenprofilblockreihe 4b vorgesehen. Der vergleichbare Bruderblock bzw. Referenzprofilblock 8b ist am dazu unterhalb dargestellten ersten Pitch P1 derselben zweiten Zwischenprofilblockreihe 4b vorgesehen, wobei dieser Referenzprofilblock 8b die gleiche Pitchlänge PL1 sowie die gleiche Aufstandsfläche bzw. Außenumfangsfläche 28 aufweist. Ein Spike-Block 8a und ein zugehöriger Referenzprofilblock 8b bzw. Bruderblock weisen stets die gleiche Außenumfangsfläche 28 auf.

Hier links der Mittelprofilblockreihe 5 ist im Bereich des oberen zweiten Pitches P2 ein Spike-Profilblock 8a an der zweiten Zwischenprofilblockreihe 4b vorgesehen. Der vergleichbare Bruderblock bzw. Referenzprofilblock 8b ist am dazu unterhalb dargestellten zweiten Pitch P2 derselben zweiten Zwischenprofilblockreihe 4b vorgesehen, wobei dieser Referenzprofilblock 8b die gleiche Pitchlänge PL2 sowie die gleiche Aufstandsfläche bzw. Außenumfangsfläche 28 aufweist.

Hier links der Mittelprofilblockreihe 5 ist ebenfalls im Bereich des oberen zweiten Pitches P2 ein Referenzprofilblock 8b an der dritten Zwischenprofilblockreihe 4c vorgesehen. Der vergleichbare Bruderblock bzw. Spike-Profilblock 8a ist am dazu unterhalb dargestellten zweiten Pitch P2 derselben dritten Zwischenprofilblockreihe 4c vorgesehen, wobei dieser Referenzprofilblock 8b die gleiche Pitchlänge PL2 sowie die gleiche Aufstandsfläche bzw. Außenumfangsfläche 28 aufweist.

Hier rechts der Mittelprofilblockreihe 5 ist im Bereich des oberen ersten Pitches P1 ein Referenzprofilblock 8b an der Zwischenprofilblockreihe 4e vorgesehen. Der vergleichbare Bruderblock bzw. Spike-Profilblock 8a ist am dazu unterhalb dargestellten ersten Pitch P1 derselben Zwischenprofilblockreihe 4e vorgesehen, wobei dieser Spike-Profilblock 8a die gleiche Pitchlänge PL1 sowie die gleiche Aufstandsfläche bzw. Außenumfangsfläche 28 aufweist.

Hier rechts der Mittelprofilblockreihe 5 ist im Bereich des oberen zweiten Pitches P2 ein Spike-Profilblock 8a an der Zwischenprofilblockreihe 4d vorgesehen. Der vergleichbare Bruderblock bzw. Referenzprofilblock 8b ist am dazu unterhalb dargestellten zweiten Pitch P2 derselben Zwischenprofilblockreihe 4d vorgesehen, wobei dieser Referenzprofilblock 8b die gleiche Pitchlänge PL2 sowie die gleiche Aufstandsfläche bzw. Außenumfangsfläche 28 aufweist.

Die Profilblöcke 8 und die Referenzprofilblöcke 8b der Zwischenprofilblockreihen 4a - 4f, die Profilblöcke 7 der Schulterprofilblockreihe 3a, 3b und die Profilblöcke 9 der Mittelprofilblockreihe 5 weisen Feineinschnitte 12 und Mikrorillen 13 auf. Während die Profilblöcke 7 der Schulterprofilblockreihe 3a, 3b zusätzlich Quer-Mikrorillen 14a (vgl. Figur 1) aufweisen, weisen die Profilblöcke 8 und die Referenzprofilblöcke 8b der Zwischenprofilblockreihen 4a - 4f sowie die Profilblöcke 9 der Mittelprofilblockreihe 5 zusätzlich Quer-Feineinschnitte 14b (vgl. Figur 2 und Figur 3) auf. Ein exemplarischer Profilblock 8 der ersten Zwischenprofilblockreihe 4a ist in Figur 2 dargestellt. Außerdem weisen auch ein Teil der Spike-Profilblöcke 8a Feineinschnitte 12, Mikrorillen 13 und Quer-Feineinschnitte 14b auf, vgl. Figur 3. Dies hängt jedoch von der Größe der Außenumfangsfläche 28 des jeweiligen Spike-Profilblocks 8a sowie der erforderlichen Fläche des Schutzbereichs 11 ab. Demnach können einige Spike-Profilblöcke 8a, wie beispielsweise die Spike-Profilblöcke 8a der Zwischenprofilblockreihe 4b und 4c am unteren Rand der Figur 1, aufgrund der elliptischen Ausgestaltung des darauf angeordneten Schutzbereichs 11 flächenmäßig zu klein sein, um Feineinschnitte, Mikrorillen, Quer-Feineinschnitte und/oder Quer-Mikrorillen aufzuweisen.

Die Profilblöcke 7, 8, 8a, 8b, 9 der Lauffläche 2 erzeugen eine Summe der projizierten Kantenlänge in Reifenbreitenrichtung 15 innerhalb der Bodenaufstandsflächenbreite 24 und über den gesamten Reifenumfang, wobei diese Summe mindestens 90% einer Referenzsumme der projizierten Kantenlänge in Reifenbreitenrichtung 15 beträgt. Die Referenzsumme wird als die Gesamtsumme aller projizierten Kantenlängen in Reifenbreitenrichtung 15 innerhalb der Bodenaufstandsflächenbreite 24 und über den Reifenumfang bestimmt, indem alle Spike-Profilblöcke 8a und Schutzbereiche 11 durch ihre jeweiligen Referenzprofilblöcke 8b ersetzt werden. Mit anderen Worten wird zur Berechnung der Referenzsumme angenommen, dass die Spike-Profilblöcke 8a durch Referenzprofilblöcke 8b, deren Blockaußenmaße im Wesentlichen identisch sind, ersetzt sind.

Ein Anteil der Kantenlänge in Reifenbreitenrichtung 15 innerhalb der Bodenaufstandsflächenbreite 24 und aufsummiert über den gesamten Umfang des Fahrzeugreifens 1 beträgt bezogen auf eine Bodenaufstandsfläche 25 des Fahrzeugreifens 1 mindestens 0,15.

Die Profilblöcke 7, 8, 8a, 8b, 9 weisen in diesem Beispiel eine Blockkontaktfläche für einen vollständigen Reifenumfang zwischen 67% und 74% auf.

Gemäß den Figuren 2 und 3 sind die Feineinschnitte 12 der Profilblöcke 7, 8, 8a, 8b, 9, die Feineinschnitte 12, Mikrorillen 13 sowie Quer-Mikrorillen 14a bzw. Quer-Feineinschnitte 14b aufweisen, in Form von Breitenrichtungslamellen ausgebildet. Die Breitenrichtungslamellen bzw. Feineinschnitte 12 sind zickzackförmig ausgebildet und weisen in ihrer Längserstreckung abwechselnd angeordnet Linienbereiche 17 und Wellenbereiche 18 mit Amplituden zu einer gedachten Referenzmittellinie der Breitenrichtungslamelle auf. Die Breitenrichtungslamellen des jeweiligen Profilblocks 7, 8, 8a, 8b, 9 sind in Draufsicht im Wesentlichen parallel beabstandet zueinander verlaufend angeordnet. Außerdem sind Breitenrichtungslamellen, wie in Figur 2 angedeutet ist, an mehreren der Profilblöcken 7, 8, 8a, 8b, 9 im Wesentlichen parallel zu einer ersten Kante 20 dieses Profilblocks 7, 8, 8a, 8b, 9 ausgerichtet. Dies kann, muss aber nicht, für alle Profilblöcke 7, 8, 8a, 8b, 9 vorgesehen sein.

Mikrorillen 13 der Profilblöcke 7, 8, 8a, 8b, 9 sind im Wesentlichen geradlinig ausgebildet und erstrecken sich parallel und kreuzungsfrei zu den genannten Feineinschnitten 12 bzw. Breitenrichtungslamellen desselben Profilblocks 7, 8, 8a, 8b, 9. Vorliegend sind Feineinschnitte 12 und Mikrorillen 13 abwechselnd nebeneinander angeordnet.

Die Feineinschnitte 12 und/oder die Mikrorillen 13 des jeweiligen Profilblocks 7, 8, 8a, 8b, 9 sind mit einer Abweichung von kleiner als 45° zu einer axialen Richtung 16 des Fahrzeugreifens 1 angeordnet.

Vorliegend weisen die Profilblöcke 7, 8, 8a, 8b, 9 ferner Quer-Mikrorillen 14a oder Quer-Feineinschnitte 14b auf, die in Draufsicht im Wesentlichen parallel beabstandet zueinander verlaufend angeordnet sind. Die Quer-Mikrorillen 14a und Quer-Feineinschnitte 14b sind mit einem Winkel, also schräg, zu den Feineinschnitten 12 und Mikrorillen 13 ausgerichtet und kreuzen diese. Ferner sind die Quer-Mikrorillen 14a und Quer-Feineinschnitte 14b im Wesentlichen geradlinig ausgebildet. Die Quer-Feineinschnitte 14b sind ferner parallel zu einer zweiten Kante 21 dieses Profilblocks 7, 8, 8a, 8b, 9 ausgerichtet.

Alternativ oder ergänzend zu den Quer-Mikrorillen 14a können - hier nicht gezeigte - Quer-Feineinschnitte 14b vorgesehen sein, welche entsprechend angeordnet und ausgerichtet sind.

Alternativ oder ergänzend zu den Quer-Feineinschnitte 14b können - hier nicht gezeigte - Quer-Mikrorillen vorgesehen sein, welche entsprechend angeordnet und ausgerichtet sind.

Durch eine optimierte Anordnung der Spikes 10, Schutzbereiche 11, Feineinschnitte 12, Mikrorillen 13, Quer-Mikrorillen 14a und Quer-Feineinschnitte 14b kann die Kantenlänge in Reifenbreitenrichtung 15 trotz der Schutzbereiche 11 auf ein Optimum erhöht werden, um den Zielkonflikt zwischen der Performance des Fahrzeugreifens 1 auf glatter Eisfläche und der Performance des Fahrzeugreifens 1 auf rauem Eis zu lösen. Dadurch wird eine verbesserte Traktion und Fahrstabilität erreicht, ohne die Kontaktfläche oder die Flexibilität der Profilblöcke 7, 8, 8a, 8b, 9 wesentlich zu beeinträchtigen.

### Bezugszeichenliste

- 1: Fahrzeugreifen
- 2: Lauffläche
- 3a, 3b: Schulterprofilblockreihe
- 4a, 4b, 4c: Zwischenprofilblockreihe
- 4d, 4e, 4f: Zwischenprofilblockreihe
- 5: Mittelprofilblockreihe
- 6: Erste Quer- bzw. Schrägrille
- 7: Profilblock der Schulterprofilblockreihe
- 8: Profilblock der Zwischenprofilblockreihe
- 8a: Spike-Profilblock der Zwischenprofilblockreihe
- 8b: Referenzprofilblock der Zwischenprofilblockreihe
- 9: Profilblock der Mittelprofilblockreihe
- 10: Spike
- 11: Schutzbereich
- 12: Feineinschnitt
- 13: Mikrorille
- 14a: Quer-Mikrorille
- 14b: Quer-Feineinschnitt
- 15: Reifenbreitenrichtung
- 16: axiale Richtung des Fahrzeugreifens
- 17: Linienbereich
- 18: Wellenbereich
- 19: Reifenumfangsrichtung
- 20: Erste Kante
- 21: Zweite Kante
- 22: Erste Nebenrille
- 23: Zweite Nebenrille
- 24: Bodenaufstandsflächenbreite
- 25: Bodenaufstandsfläche
- 26: Zweite Schrägrille
- 27: Dritte Schrägrille
- 28: Außenumfangsfläche
- P1: Pitch
- P2: Pitch
- PL1: Pitchlänge
- PL2: Pitchlänge

## Patentansprüche

1. Fahrzeugreifen (1), insbesondere Winterreifen, mit einer Lauffläche (2), die eine Schulterprofilblockreihe (3a, 3b), eine Zwischenprofilblockreihe (4a, 4b, 4c,4d, 4e, 4f) und eine Mittelprofilblockreihe (5) umfasst, wobei diese Profilblockreihen (3a, 3b, 4a - 4f, 5) in Pitches (P1, P2) mit zumindest zwei unterschiedlichen Pitchlängen (PL1, PL2) gegliedert sind, wobei Umfangslängen der Profilblöcke (7, 8, 8a, 8b, 9) dieser Profilblockreihen (3a, 3b, 4a - 4f, 5) mit den unterschiedlichen Pitchlängen (PL1, PL2) variieren, wobei die Zwischenprofilblockreihen (4a - 4f) mehrere Spike-Profilblöcke (8a) mit Spikes (10) und Schutzbereichen (11) sowie mehrere Referenzprofilblöcke (8b) ohne Spikes und Schutzbereiche umfassen, wobei für jeden Spike-Profilblock (8a) in seiner Zwischenprofilblockreihe (4a-4f) ein Referenzprofilblock (8b) mit identischer Pitchlänge (PL1, PL2) und Außenumfangsfläche (28) vorgesehen ist, wobei zumindest die Profilblöcke (7, 9) der Schulterprofilblockreihe (3a, 3b) und der Mittelprofilblockreihe (5) Feineinschnitte (12), Mikrorillen (13), Quer-Feineinschnitte (14b) und/oder Quer-Mikrorillen (14a) aufweisen, wobei die Profilblöcke (7 - 9) eine Summe der projizierten Kantenlänge in Reifenbreitenrichtung (15) innerhalb der Bodenaufstandsflächenbreite (24) und über den gesamten Reifenumfang erzeugen, wobei diese Summe mindestens 90% einer Referenzsumme der projizierten Kantenlänge in Reifenbreitenrichtung (15) beträgt, wobei die Referenzsumme als die Gesamtsumme aller projizierten Kantenlängen in Reifenbreitenrichtung (15) innerhalb der Bodenaufstandsflächenbreite (24) und über den Reifenumfang bestimmt wird, indem alle Spike-Profilblöcke (8a) und Schutzbereiche (11) durch ihre jeweiligen Referenzprofilblöcke (8b) ersetzt werden.

2. Fahrzeugreifen (1) nach Anspruch 1, **dadurch gekennzeichnet, dass** ein Anteil der Kantenlänge in Reifenbreitenrichtung (15) innerhalb der Bodenaufstandsflächenbreite (24) und aufsummiert über den gesamten Umfang des Fahrzeugreifens (1) bezogen auf eine Bodenaufstandsfläche (25) des Fahrzeugreifens (1) mindestens 0,15 beträgt.

3. Fahrzeugreifen (1) nach Anspruch 1 oder Anspruch 2, **dadurch gekennzeichnet, dass** ein oder eine Vielzahl von Profilblöcken (8) der Zwischenprofilblockreihe (4a - 4f) eine Vielzahl von Feineinschnitten (12), Mikrorillen (13), Quer-Feineinschnitte (14b) und/oder Quer-Mikrorillen (14a) aufweist.

4. Fahrzeugreifen (1) nach einem der vorhergehenden Ansprüche, **dadurch gekennzeichnet, dass** die Feineinschnitte (12) und/oder die Mikrorillen (13) des jeweiligen Profilblocks (7, 8, 9) mit einer Abweichung von kleiner als 45° zu einer axialen Richtung (16) des Fahrzeugreifens (1) angeordnet sind.

5. Fahrzeugreifen (1) nach einem der vorhergehenden Ansprüche, **dadurch gekennzeichnet, dass** ein oder eine Vielzahl der Feineinschnitte (12) wenigstens eines der Profilblöcke (7, 8, 9) jeweils in Form einer Breitenrichtungslamelle ausgebildet ist.

6. Fahrzeugreifen (1) nach Anspruch 5, **dadurch gekennzeichnet, dass** die jeweilige Breitenrichtungslamelle jeweils einen oder eine Vielzahl von Linienbereichen (17), die sich in einer geraden oder gekrümmten Form erstrecken, und einen oder eine Vielzahl von Wellenbereichen (18) mit einer Amplitude zu einer Referenzmittellinie der Breitenrichtungslamelle aufweisen.

7. Fahrzeugreifen (1) nach Anspruch 5 oder Anspruch 6, **dadurch gekennzeichnet, dass** die Breitenrichtungslamellen des jeweiligen Profilblocks (7, 8, 9) in Draufsicht im Wesentlichen parallel beabstandet zueinander verlaufend angeordnet sind.

8. Fahrzeugreifen (1) nach Anspruch 7, **dadurch gekennzeichnet, dass** die Breitenrichtungslamellen eines oder einer Vielzahl der Profilblöcke (7, 8, 9) im Wesentlichen parallel zu einer ersten Kante (20) dieses Profilblocks (7, 8, 9) ausgerichtet sind.

9. Fahrzeugreifen (1) nach einem der Ansprüche 5 bis 8, **dadurch gekennzeichnet, dass** sich die Mikrorillen (13) des jeweiligen Profilblocks (7, 8, 9) parallel und kreuzungsfrei zu den Breitenrichtungslamellen desselben Profilblocks (7, 8, 9) erstrecken.

10. Fahrzeugreifen (1) nach einem der vorhergehenden Ansprüche, **dadurch gekennzeichnet, dass** eine oder mehrere der Quer-Feineinschnitte (14b) und/oder der Quer-Mikrorillen (14a) schräg zu wenigstens einer der Breitenrichtungslamellen und/oder wenigstens einer der Mikrorillen (13) verläuft oder verlaufen.

11. Fahrzeugreifen (1) nach einem der vorhergehenden Ansprüche, **dadurch gekennzeichnet, dass** die Quer-Feineinschnitte (14b) und/oder die Quer-Mikrorillen (14a) eines oder einer Vielzahl der Profilblöcke (7, 8, 9) im Wesentlichen parallel zu einer zweiten Kante (21) dieses Profilblocks (7, 8, 9) ausgerichtet sind.

12. Fahrzeugreifen (1) nach einem der vorhergehenden Ansprüche, **dadurch gekennzeichnet, dass** die Profilblöcke (7, 8, 9) eine Blockkontaktfläche für einen vollständigen Reifenumfang zwischen 60% und 80%, vorzugsweise zwischen 65% und 76%, bevorzugt zwischen 67% und 74%, aufweisen.

13. Fahrzeugreifen (1) nach einem der vorhergehenden Ansprüche, **dadurch gekennzeichnet, dass** die Lauffläche (2) zwei Schulterprofilblockreihen (3a, 3b) und genau eine dazwischen angeordnete Mittelprofilblockreihe (5) umfasst, wobei in axialer Richtung (16) des Fahrzeugreifens (1) zwischen der jeweiligen Schulterprofilblockreihe (3a, 3b) und der Mittelprofilblockreihe (5) jeweils wenigstens zwei Zwischenprofilblockreihen (4a - 4f) angeordnet sind.

14. Fahrzeugreifen (1) nach Anspruch 13, **dadurch gekennzeichnet, dass** die Profilblöcke (8) von jeweils zwei benachbarten Zwischenprofilblockreihen (4a - 4f) durch eine Nebenrille (22) voneinander getrennt sind, die jeweils zwei in Reifenumfangsrichtung (19) aufeinander folgende Quer- und/oder Schrägrillen (6) miteinander verbindet.

15. Fahrzeugreifen (1) nach Anspruch 14, **dadurch gekennzeichnet, dass** ein erster Pitch (P1) mit einer ersten Pitchlänge (PL1) beidseits der Mittelprofilblockreihe (5) jeweils zwei Zwischenprofilblockreihen (4a, 4b, 4e, 4f) aufweist, und dass ein zweiter Pitch (P2) mit einer zweiten Pitchlänge (PL2) beidseits der Mittelprofilblockreihe (5) jeweils drei Zwischenprofilblockreihen (4a - 4f) aufweist.
